# EUROPEAN PATENT APPLICATION

(11) **EP 4 708 935 A1**
(43) Date of publication of application: **11.03.2026**
(21) Application number: 24869914.2
(22) Date of filing: 27.06.2024
(51) Int. Cl.: H04W 4/80

(54) **ELECTRONIC DEVICE, AUDIO POWER AMPLIFIER CHIP, AND DEVICE RETRIEVAL METHOD**

(30) Priority: 26.09.2023 CN 202311254006
(71) Applicant: Huawei Technologies Co., Ltd., Shenzhen, Guangdong 518129 (CN)
(72) Inventor: DUAN, Zhiqiang, Shenzhen, Guangdong 518129 (CN); CHEN, Senjun, Shenzhen, Guangdong 518129 (CN); KUANG, Huogen, Shenzhen, Guangdong 518129 (CN); YANG, Jiangtao, Shenzhen, Guangdong 518129 (CN); LUO, Yuchen, Shenzhen, Guangdong 518129 (CN)
(74) Representative: Isarpatent
(86) International application number: PCT/CN2024/102071
(87) International publication number: WO 2025/066355

(57) **Abstract**

This application provides an electronic device, an audio power amplifier chip, and a device retrieval method, to reduce power consumption of a lost electronic device during a retrieval process. The electronic device includes an audio power amplifier chip, a short-range communication module, and a speaker. The short-range communication module may receive a first instruction from a second electronic device when the electronic device is in an off state. The audio power amplifier chip may output audio through the speaker in response to the first instruction.

## Description

### CROSS-REFERENCE TO RELATED APPLICATIONS

This application claims priority to Chinese Patent Application No. 202311254006.7, filed with the China National Intellectual Property Administration on September 26, 2023 and entitled "ELECTRONIC DEVICE, AUDIO POWER AMPLIFIER CHIP, AND DEVICE RETRIEVAL METHOD", which is incorporated herein by reference in its entirety.

### TECHNICAL FIELD

Embodiments of this application relate to the technical field of electronic devices, and in particular, to an electronic device, an audio power amplifier chip, and a device retrieval method.

### BACKGROUND

With development of electronic device technologies, an electronic device has increasingly rich functions and increasingly extensive usage scenarios, and a user often uses the electronic device anytime and anywhere. However, in some special scenarios, a case in which the user loses the electronic device may occur. For example, the user may leave the electronic device behind somewhere, or the electronic device of the user may be stolen by a thief. Therefore, a corresponding retrieval function needs to be provided for the electronic device, so that the user can retrieve the electronic device in a timely manner, to ensure property security and information security of the user.

In some technical solutions, a geographical range in which the lost electronic device is located may be determined through a locate and find function of the electronic device. However, the locate and find function cannot be used when the lost electronic device is in an off state.

Therefore, how to retrieve the lost electronic device when the lost electronic device is in the off state is an urgent problem that needs to be resolved in this field.

### SUMMARY

This application provides an electronic device, an audio power amplifier chip, and a device retrieval method, to reduce power consumption of a lost electronic device during a retrieval process.

According to a first aspect, an embodiment of this application provides an electronic device. The electronic device includes an audio power amplifier chip, a short-range communication module, and a speaker. The short-range communication module is configured to receive a first instruction from a second electronic device when the electronic device is in an off state. The audio power amplifier chip is configured to output audio through the speaker in response to the first instruction.

The second device may be understood as another device that is used by a user to assist in searching for the electronic device.

According to this embodiment of this application, when the electronic device is in the off state, the audio power amplifier chip in the electronic device may directly output the audio through the speaker in the electronic device in response to a ring instruction (namely, the first instruction) received by the short-range communication module. In this way, compared with a technical solution in which, when the electronic device is in the off state, a system on chip (system on chip, SOC) and/or a codec (coder decoder, Codec) in the electronic device control/controls the audio power amplifier chip to output the audio through the speaker in response to the ring instruction received by the short-range communication module, this embodiment of this application does not require power supply to the SOC and/or the codec, thereby effectively reducing power consumption of the electronic device during a retrieval process. In addition, because fewer modules require power supply when the electronic device is in the off state, a battery life of the electronic device in the off state is longer, which can increase a probability of successfully retrieving the lost electronic device.

In a possible design, the short-range communication module is further configured to send a second instruction to the audio power amplifier chip after receiving the first instruction. The second instruction is used to start the audio power amplifier chip. In this design, the audio power amplifier chip is in a powered-off state before the short-range communication module receives the first instruction, and after receiving the first instruction, the short-range communication module triggers the audio power amplifier chip to be powered on. In this way, power consumption of the electronic device in the off state can be further reduced, and a battery life of the electronic device in the off state is increased, thereby further increasing a probability of successfully retrieving the lost electronic device.

In a possible design, the electronic device further includes a battery. The battery is configured to supply power to the audio power amplifier chip and/or the short-range communication module when the electronic device is in the off state. In this design, when the electronic device is in the off state, the battery supplies power to the audio power amplifier chip and the short-range communication module, so that the audio power amplifier chip and the short-range communication module can continuously work, thereby effectively ensuring that the electronic device rings.

In a possible design, the electronic device further includes a power supply switch. The power supply switch is configured to control the battery to supply power to the audio power amplifier chip and the short-range communication module when the electronic device is in the off state. In this design, the power supply switch is used to control the battery to supply power to the audio power amplifier chip and the short-range communication module.

In a possible design, the electronic device further includes a power management unit. The power management unit is configured to supply power to the audio power amplifier chip and the short-range communication module when the electronic device is in the off state. In this design, the power management unit is disposed in the electronic device. In a process in which the power management unit supplies power to the audio power amplifier chip and the short-range communication module, the power management unit may monitor a power supply status in real time, which helps improve reliability, security, and performance of the electronic device.

In a possible design, when the electronic device is in the off state, if the short-range communication module does not receive the first instruction within preset duration, the short-range communication module is in a powered-off state. The preset duration may be, for example, 5 minutes or 10 minutes. In this design, when the electronic device is in the off state, if the short-range communication module does not receive the first instruction within the preset duration, the short-range communication module is in the powered-off state, so that power consumption of the electronic device in the off state can be further reduced, and a battery life of the electronic device in the off state is increased, thereby further increasing a probability of successfully retrieving the lost electronic device.

In a possible design, when the electronic device is in the off state, the short-range communication module is in a powered-on state within a preset period, and the short-range communication module is in a powered-off state beyond the preset period. In this design, by periodically controlling the short-range communication module to be in the powered-off state, power consumption of the electronic device in the off state can be further reduced, and a battery life of the electronic device in the off state is increased, thereby further increasing a probability of successfully retrieving the lost electronic device.

In a possible design, when the electronic device is in the off state, the short-range communication module is run by a low-power core in the electronic device. In this design, power consumption of the electronic in the off state can be further reduced by running the short-range communication module by the low-power core.

In a possible design, the electronic device further includes a locating module. The locating module is configured to: obtain location information of the electronic device in response to the first instruction, and upload the location information to a server. In this design, when the electronic device is in the off state, the locating module in the electronic device is in a power supply state. The locating module obtains the location information of the electronic device in response to the first instruction, and uploads the location information to the server, to implement precise locating of the electronic device, thereby further increasing a success rate of retrieving the electronic device.

In a possible design, the short-range communication module is further configured to send a third instruction to the locating module after receiving the first instruction. The third instruction is used to start the locating module. In this design, the locating module is in a powered-off state before the short-range communication module receives the first instruction, and after receiving the first instruction, the short-range communication module triggers the locating module to be powered on. In this way, power consumption of the electron in the off state can be further reduced.

According to a second aspect, an embodiment of this application provides an audio power amplifier chip. The audio power amplifier chip includes a waveform generator, a digital processor, a pulse-width modulation generator, and a power amplifier. The waveform generator is configured to generate a waveform signal of audio. The digital processor is configured to convert the waveform signal of the audio into a digital signal of the audio. The pulse-width modulation generator is configured to modulate the digital signal of the audio to obtain a pulse signal of the audio. The power amplifier is configured to perform power amplification on the pulse signal of the audio, to obtain an analog signal of the audio.

In this embodiment of this application, the waveform generator is disposed in the audio power amplifier chip, so that the audio power amplifier chip can generate a waveform signal of audio and output corresponding audio, and the audio power amplifier chip does not need to receive the waveform signal of the audio from another control chip. For example, when the audio power amplifier chip is deployed in an electronic device, when the electronic device is in an off state and another control chip is in a powered-off state, the audio power amplifier chip may still output an audio signal through a speaker in the electronic device.

In a possible design, the audio power amplifier chip further includes an I/O interface, and the waveform generator receives a first instruction through the I/O interface. That the waveform generator generates the waveform signal of the audio includes: The waveform generator generates the waveform signal of the audio in response to the first instruction. In this design, the I/O interface is disposed in the audio power amplifier chip, so that when the audio power amplifier chip is deployed in the electronic device, the waveform generator may receive, through the I/O interface, the first instruction from another module in the electronic device, thereby enabling the audio power amplifier chip to directly drive the speaker in the electronic device to ring.

In a possible design, the waveform generator is disposed between the I/O interface and the digital processor, or the waveform generator is disposed in the digital processor. In this design, a plurality of arrangement manners of the waveform generator are provided, so that the audio power amplifier chip provided in this embodiment of this application can be flexibly implemented.

In a possible design, the audio power amplifier chip further includes a phase locked loop and an oscillator. The oscillator is configured to provide a clock signal for the phase locked loop. The clock signal is used to implement clock synchronization of components in the audio power amplifier chip. In this design, the oscillator is disposed in the audio power amplifier chip, so that when the audio power amplifier chip is deployed in the electronic device, even if the electronic device is in the off state, the phase locked loop can also implement clock synchronization of components in the audio power amplifier chip based on a corresponding clock signal, and the speaker can ring normally.

According to a third aspect, an embodiment of this application provides a device retrieval method. The method may be applied to an electronic device. The electronic device includes an audio power amplifier chip, a short-range communication module, and a speaker. The method includes: receiving a first instruction from a second electronic device by using the short-range communication module when the electronic device is in an off state; and outputting, by the audio power amplifier chip, audio through the speaker in response to the first instruction.

In the method, when the electronic device is in the off state, the audio power amplifier chip may directly drive the speaker to ring. When the electronic device is lost and the electronic device is in the off state, a user may search for the electronic device in time based on an audio signal output by the speaker. In addition, because the audio power amplifier chip may directly drive the speaker to ring, when the electronic device is in the off state, a power supply module in the electronic device does not need to supply power to another module (for example, an SOC) in the electronic device, so that power consumption of the electronic device during a retrieval process can be effectively reduced.

In a possible design, the method further includes: The short-range communication module sends a second instruction to the audio power amplifier chip after receiving the first instruction. The second instruction is used to start the audio power amplifier chip.

In a possible design, the electronic device further includes a battery, and the method further includes: supplying power to the audio power amplifier chip and/or the short-range communication module by using the battery when the electronic device is in the off state.

In a possible design, the electronic device further includes a power supply switch, and the method further includes: controlling, by using the power supply switch, the battery to supply power to the audio power amplifier chip and the short-range communication module when the electronic device is in the off state.

In a possible design, the electronic device further includes a power management unit, and the method further includes: supplying power to the audio power amplifier chip and the short-range communication module by using the power management unit when the electronic device is in the off state.

In a possible design, the method further includes: when the electronic device is in the off state, if the short-range communication module does not receive the first instruction within preset duration, the short-range communication module is in a powered-off state.

In a possible design, the method further includes: the short-range communication module is in a powered-on state within a preset period, and the short-range communication module is in a powered-off state beyond the preset period.

In a possible design, when the electronic device is in the off state, the short-range communication module is run by a low-power core in the electronic device.

In a possible design, the electronic device further includes a locating module. The method further includes: The locating module obtains location information of the electronic device in response to the first instruction, and uploads the location information to a server.

In a possible design, the method further includes: The short-range communication module sends a third instruction to the locating module after receiving the first instruction. The third instruction is used to start the locating module.

According to a fourth aspect, an embodiment of this application provides a computer-readable storage medium. The computer-readable storage medium includes a computer program. When the computer program is run on an electronic device, the electronic device is enabled to implement the method according to the first aspect and any one of the possible implementations of the first aspect.

According to a fifth aspect, an embodiment of this application further provides an apparatus. The apparatus includes modules/units for performing the method in any possible design in any one of the foregoing aspects. These modules/units may be implemented by hardware, or may be implemented by executing corresponding software by hardware.

According to a sixth aspect, an embodiment of this application further provides a computer program product. When the computer program product is run on a terminal, the electronic device is enabled to perform the method in any possible design in any one of the foregoing aspects.

For beneficial effects of the third aspect to the fourth aspect, refer to related descriptions in the first aspect. Details are not described herein again. These aspects or other aspects in embodiments of this application are clearer and more comprehensible in descriptions of the following embodiments.

### BRIEF DESCRIPTION OF DRAWINGS

FIG. 1A is a diagram of a scenario according to an embodiment of this application;
FIG. 1B is a diagram of a structure of an electronic device A according to an embodiment of this application;
FIG. 1C is a diagram of a structure of a smart PA chip according to an embodiment of this application;
FIG. 2 is a diagram of a scenario according to an embodiment of this application;
FIG. 3A is a diagram 1 of a structure of an electronic device 100 according to an embodiment of this application;
FIG. 3B is a diagram 2 of a structure of an electronic device 100 according to an embodiment of this application;
FIG. 3C is a diagram 3 of a structure of an electronic device 100 according to an embodiment of this application;
FIG. 3D is a diagram 4 of a structure of an electronic device 100 according to an embodiment of this application;
FIG. 4A is a diagram 1 of a structure of an audio power amplifier chip 102 according to an embodiment of this application;
FIG. 4B is a diagram 2 of a structure of an audio power amplifier chip 102 according to an embodiment of this application;
FIG. 5 is a schematic flowchart of a device retrieval method according to an embodiment of this application;
FIG. 6 is a diagram 5 of a structure of an electronic device 100 according to an embodiment of this application; and
FIG. 7 is a diagram of a structure of another electronic device.

### DESCRIPTION OF EMBODIMENTS

In embodiments of this application, unless otherwise stated or there is a logic conflict, terms and/or descriptions between various embodiments are consistent and may be mutually referenced, and technical features in different embodiments may be combined based on an internal logical relationship thereof, to form a new embodiment.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following" or a similar expression thereof means any combination of these items, including a singular item or any combination of plural items. For example, at least one of a, b, or c may indicate a, b, c, a and b, a and c, b and c, or a, b, and c, where a, b, and c may be singular or plural.

In addition, unless otherwise stated, ordinal numbers such as "first" and "second" in embodiments of this application are intended to distinguish between a plurality of objects, but are not intended to limit priorities or importance degrees of the plurality of objects.

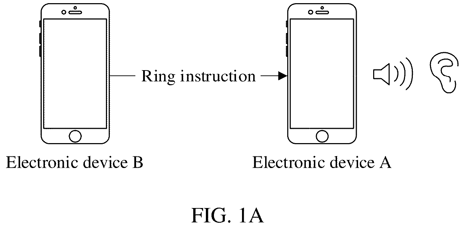

As shown in FIG. 1A, an electronic device A is an electronic device lost by a user, and an electronic device B is a device used by the user to assist in searching for the electronic device A. A communication connection may be established between the electronic device A and the electronic device B. Therefore, when the electronic device A is lost, a person who tries to search for the electronic device A may send a ring instruction to the electronic device A by using the electronic device B. The ring instruction includes indication information 1, and the indication information 1 indicates some modules (for example, a codec (coder decoder, Codec) and a SOC) in the electronic device A to start, to trigger the electronic device A to ring. In this way, the person may search for the electronic device A based on a ring direction of the electronic device A.

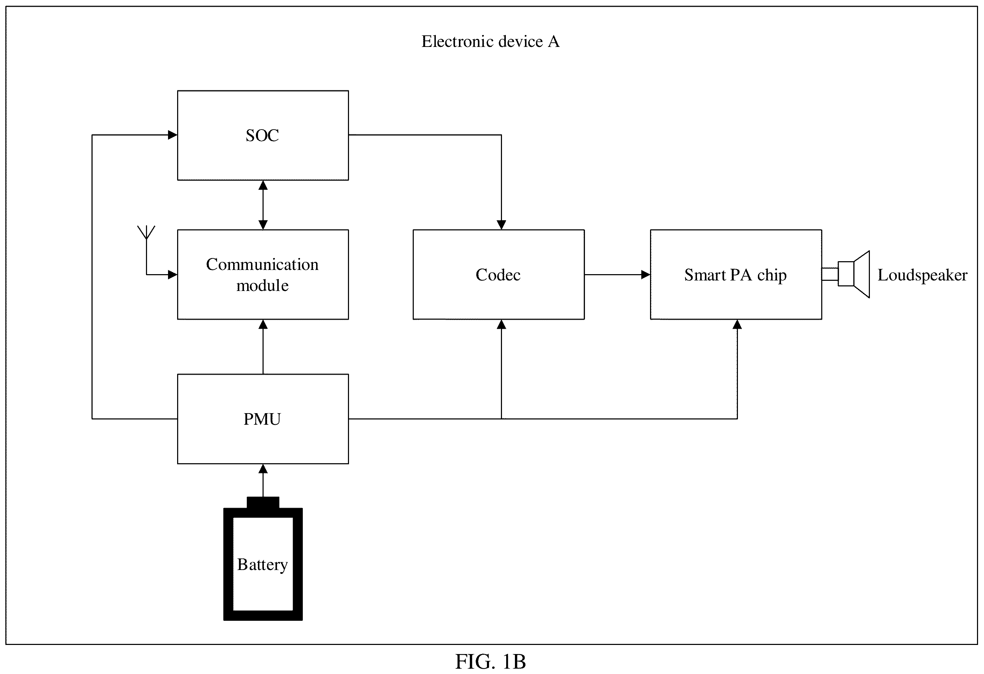

FIG. 1B is a diagram of a structure of the electronic device A. The electronic device A includes the SOC, a communication module, the codec, a smart power amplifier (smart power amplifier, Smart PA) chip, a power management unit (power management unit, PMU), a battery, and a loudspeaker. The communication module may be a Wi-Fi module or a cellular module. When the electronic device is in an off state, the PMU may supply power to the SOC, the communication module, the codec, and the smart PA chip. In this way, when the electronic device A is in an off state, the communication module may establish a communication connection to the electronic device B. The communication module may receive a ring instruction from the electronic device B, and transmit the ring instruction to the SOC. The SOC sends a ring control signal to the codec. The codec generates a waveform signal of audio in response to the ring control signal, and sends the waveform signal of the audio to the smart PA chip. The smart PA chip performs a series of processing on the waveform signal of the audio, and outputs a processed audio signal through the loudspeaker.

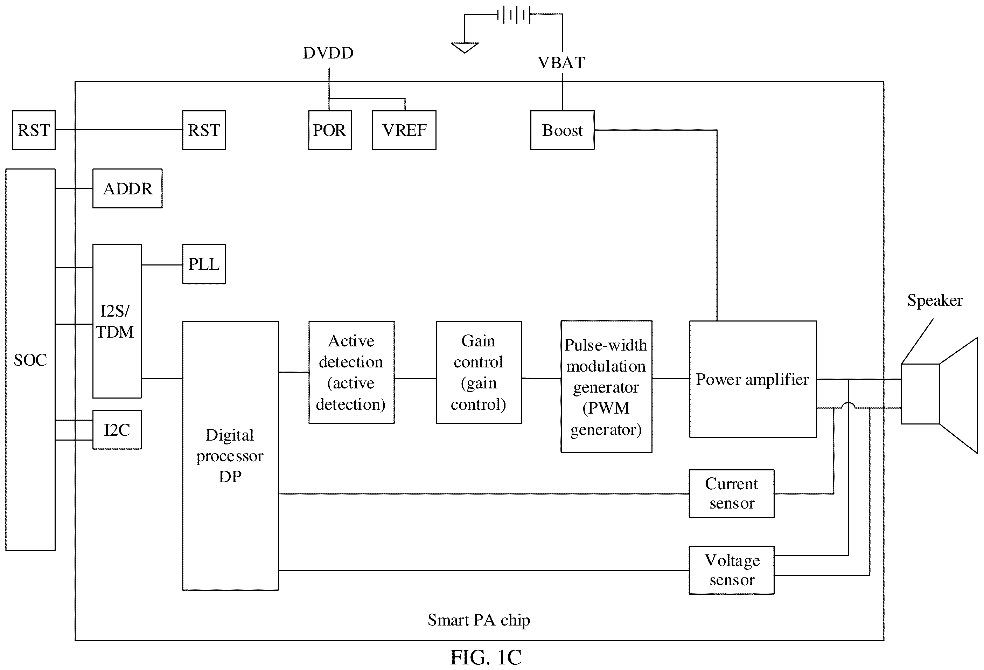

FIG. 1C is a diagram of a structure of the smart PA chip. The smart PA chip includes an inter-integrated circuit sound (inter-integrated circuit sound, I2S), time division multiplexing (time division multiplexing, TDM), an inter-integrated circuit bus (inter-integrated circuit bus, I2C), a digital processor (digital process, DP), active detection (active detection), gain control (gain control), a pulse-width modulation generator (pulse-width modulation generator, PWM Generator), a power amplifier, a phase locked loop (phase locked loop, PLL), a current sensor (current sensor), a voltage sensor (voltage sensor), and an addressing module (address, ADDR).

The I2S and the I2C may be connected to the SOC in the electronic device A, so that the SOC may perform signal transmission with the smart PA chip through the I2S. For example, the SOC may input a waveform signal, a clock signal, and a synchronization signal of audio to the smart PA chip through the I2S, so that the smart PA chip can receive and process the waveform signal of the audio, and output a processed audio signal through a speaker. In addition, the I2C may be configured to implement communication and control between the smart PA chip and the SOC. Alternatively, the I2S and the I2C may be connected to the codec in the electronic device A, so that the codec may perform signal transmission with the smart PA chip through the I2S. For example, the codec may input a waveform signal, a clock signal, and a synchronization signal of audio to the smart PA chip through the I2S, so that the smart PA chip can receive and process the waveform signal of the audio, and output a processed audio signal through a speaker. In addition, the I2C may be configured to implement communication and control between the smart PA chip and the codec.

The PLL can implement functions such as frequency synthesis, clock cleaning, stabilization, and timing adjustment, thereby providing stable and precise clock signals to meet requirements of the smart PA chip for high-quality audio processing and timing.

The current sensor is configured to monitor a current level in the smart PA chip. When a current exceeds a set threshold, an overload protection mechanism may be triggered, to prevent the current from damaging a circuit or a device. In addition, the current sensor may detect an abnormal current behavior in the circuit, for example, a short circuit or an open circuit, to help the smart PA chip detect a fault in time and take necessary measures.

The voltage sensor is configured to measure and monitor a voltage in the smart PA chip, and supports overload protection, power consumption monitoring, fault detection, power supply monitoring, current measurement, and warning and protection, to ensure reliability, security, and energy saving of the smart PA chip.

The ADDR is configured to identify and select a module of an internal or external device of the chip. The ADDR allocates and manages a unique address or identifier of the internal or external device of the chip. The address may be a fixed hardware address or a programmable software address.

A process in which the smart PA chip performs a series of processing on the waveform signal of the audio that is input by the codec or the SOC includes: The DP converts the waveform signal of the audio into a digital signal of the audio. Further, an active detection module may analyze a strength of the digital signal of the audio processed by the DP, and adjust a gain level based on a real-time monitoring result. In addition, the gain control (Gain Control) module adjusts an amplification factor or attenuation degree of the digital signal of the audio, to adapt to different output requirements. After the gain control module adjusts the digital signal of the audio, the pulse-width modulation (PWM) generator may convert the digital signal of the audio into a pulse signal of the audio, and input the pulse signal of the audio to the power amplifier. The power amplifier module performs a series of filtering and reconstruction on the pulse signal of the audio, to re-form an analog signal corresponding to an original audio signal, and then the analog signal is output through the loudspeaker of the electronic device A.

Further, the smart PA chip further includes a digital power supply voltage (digital voltage drain, DVDD), a voltage of battery (voltage of battery, VBAT), a power-on reset (power-on reset, POR), a reference voltage (reference voltage, VREF), and a boost circuit (Boost). The DVDD is used to supply power to a digital circuit part in the smart PA chip, and provides a power supply voltage and a current required by the digital circuit, to ensure that the digital circuit can work normally. The VBAT is an input voltage of battery of the smart PA chip. During application that relies on a battery as a power supply, the VBAT provides a power supply voltage required by the smart PA chip, and is used to support a connection to an external battery system and a corresponding power management function. The POR is an important function of the smart PA chip, and is used to ensure that the system is in a controllable initial state during power-on. A POR circuit detects a rising edge of power supply of the smart PA chip, and may generate a reset signal to initialize modules in the chip to a defined state. The VREF provides a stable reference level and is used within the smart PA chip for referencing and comparing other voltages or signals.

However, when the electronic device A is in an off state, a short-range communication module, the SOC, and the codec in the electronic device A are all in a powered-off state. In this case, the short-range communication module cannot receive the ring instruction from the electronic device B, and the SOC cannot control the codec to drive the smart PA chip to enable the loudspeaker of the electronic device A to ring. Therefore, an existing electronic device does not support ringing in an off state, and the electronic device cannot be retrieved when the electronic device is lost.

In view of this, this application provides an electronic device, an audio power amplifier chip, and a device retrieval method, to reduce power consumption of a lost electronic device during a retrieval process.

The following is described in detail with reference to the accompanying drawings and embodiments.

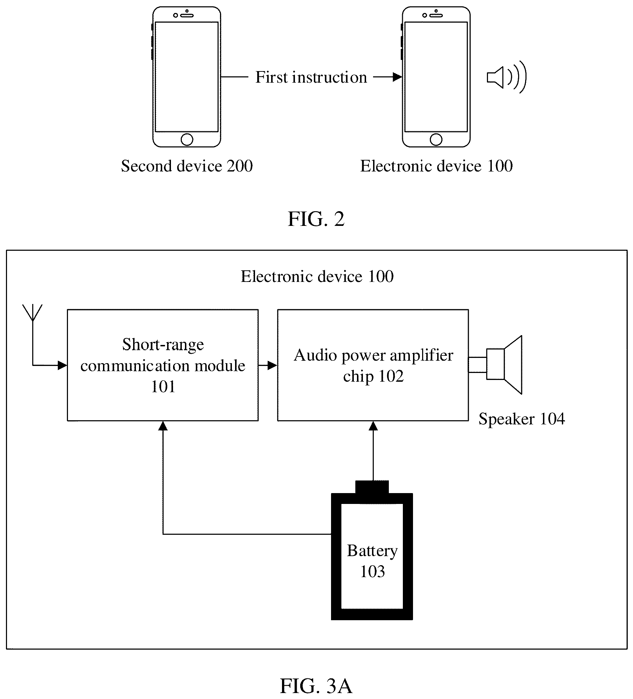

FIG. 2 shows an application scenario according to an embodiment of this application. The scenario includes an electronic device 100 and a second electronic device 200. The electronic device 100 is a device lost by a user, and the second electronic device 200 is an electronic device used to assist in searching for the electronic device 100.

In one case, the electronic device 100 and the second electronic device 200 may be devices associated with a same user identity, for example, may be devices bound to a same user account. Because device identifiers of all devices associated with a same user identity are stored in the cloud, the second electronic device 200 may obtain a device identifier of the electronic device 100 from the cloud by using the user account. When the second electronic device 200 starts a Bluetooth device search process, if the device identifier of the electronic device 100 is found, the second electronic device 200 may establish a Bluetooth connection to the electronic device 100. In this way, when the electronic device 100 is lost and is in an off state, the second electronic device 200 may send a first instruction to the electronic device 100. The first instruction may trigger an audio power amplifier chip in the electronic device 100 to drive a speaker in the electronic device 100 to emit a ringtone, so that the user can search for the electronic device 100 based on the ringtone.

In this embodiment of this application, the electronic device 100 may be, for example, any one of a mobile phone, a smartwatch, a tablet computer, or an alarm clock. This is not specifically limited in this embodiment of this application.

For example, when the electronic device 100 is a mobile phone, and the mobile phone is lost and is in an off state, a short-range communication module 101 in the mobile phone may still receive the first instruction from the second electronic device 200. In this way, an audio power amplifier chip 102 in the mobile phone may output audio through a speaker 104 in response to the first instruction. In this way, the user may search for the mobile phone based on the audio output by the speaker 104.

For another example, when the electronic device 100 is an alarm clock, and the alarm clock is in an off state, an audio power amplifier chip 102 in the alarm clock may still be in a powered-on state. In this way, the audio power amplifier chip 102 may drive, based on an alarm clock time set by the user, a speaker 104 of the alarm clock to output audio. In this way, the user may receive a reminder of an alarm ringtone on time, thereby effectively improving experience of using the alarm clock.

FIG. 3A is a diagram 1 of a structure of the electronic device 100. As shown in FIG. 3A, the electronic device 100 may include a short-range communication module 101, an audio power amplifier chip 102, a battery 103, and a speaker 104.

The following describes modules in the electronic device 100 in detail.

### (1) Short-range communication module 101

The short-range communication module 101 may be any one of a Bluetooth low energy (Bluetooth low energy, BLE) module, a Bluetooth communication module, a Zigbee module, a radio frequency identification (radio frequency identification module, RFID) module, a near-field communication (near-field communication, NFC) module, or a Wi-Fi module. This is not limited in this embodiment of this application.

When the electronic device 100 is in an off state, the short-range communication module 101 may be in a powered-on state, so that the electronic device 100 may establish a communication connection to the second electronic device 200 by using the short-range communication module 101. In this way, even when the electronic device 100 is in an off state, the short-range communication module 101 may exchange information with the second electronic device 200.

In one case, when the electronic device 100 is in the off state, if the short-range communication module 101 does not receive the first instruction within preset duration, the short-range communication module 101 may be in a powered-off state. The preset duration may be, for example, 5 minutes or 10 minutes. In this way, power consumption of the electronic device 100 in the off state can be further reduced, and a battery life of the electronic device 100 in the off state is increased, thereby further increasing a probability of successfully retrieving the lost electronic device 100.

In another case, when the electronic device 100 is in the off state, the short-range communication module 101 is in a powered-on state within a preset period, and the short-range communication module 101 is in a powered-off state beyond the preset period. The preset period may be, for example, 5 minutes, 10 minutes, or 15 minutes. In this way, by periodically controlling the short-range communication module 101 to be in the powered-off state, power consumption of the electronic device in the off state can be further reduced, and a battery life of the electronic device 100 in the off state is increased, thereby further increasing a probability of successfully retrieving the lost electronic device 100.

Optionally, when the electronic device 100 is in the off state, the electronic device 100 may run the short-range communication module 101 by using a low-power core. In this way, power consumption of the electronic device 100 during a retrieval process can be further reduced.

### (2) Battery 103

The battery 103 is configured to supply power to modules in the electronic device 100.

When the electronic device 100 is in an on state, the battery 103 may supply power to all modules in the electronic device 100.

When the electronic device 100 is in the off state, the battery 103 may supply power to some modules in the electronic device 100. For example, when the electronic device 100 is in the off state, the battery 103 may supply power to the short-range communication module 101 and/or the audio power amplifier chip 102.

The battery 103 may directly supply power to the short-range communication module 101 and/or the audio power amplifier chip 102, or the battery 103 may indirectly supply power to the short-range communication module 101 and/or the audio power amplifier chip 102.

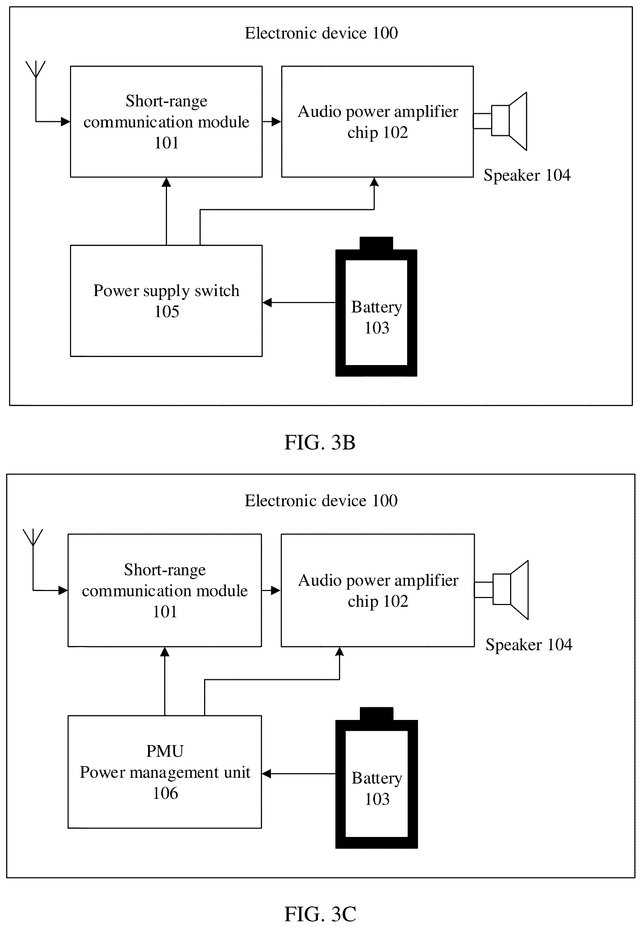

As shown in FIG. 3B, the electronic device 100 may further include a power supply switch 105. When the electronic device 100 is in the off state, the power supply switch 105 may control the battery 103 to supply power to the short-range communication module 101 and/or the audio power amplifier chip 102. That is, under control of the power supply switch 105, the battery 103 directly supplies power to the short-range communication module 101 and/or the audio power amplifier chip 102.

As shown in FIG. 3C, the electronic device 100 may further include a PMU 106. When the electronic device 100 is in the off state, the battery 103 may supply power to the PMU 106, and then the PMU 106 supplies power to the short-range communication module 101 and/or the audio power amplifier chip 102. That is, the battery 103 indirectly supplies power to the audio power amplifier chip 102 and the short-range communication module 101 through the PMU 106. In addition, in a process of supplying power to the audio power amplifier chip 102 and the short-range communication module 101, the PMU 106 may monitor a power supply status in real time, which helps improve reliability, security, and performance of the electronic device 100.

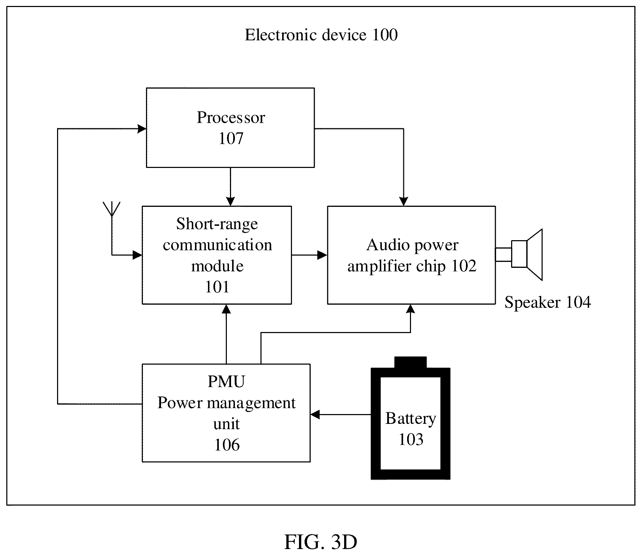

As shown in FIG. 3D, the electronic device 100 may further include a processor 107. The processor 107 may be a SOC, a digital signal processor (digital signal processor, DSP), an application-specific integrated circuit (application-specific integrated circuit, ASIC), a field programmable gate array (field programmable gate array, FPGA), another programmable logic device, a transistor logic device, or any combination thereof. The general-purpose processor may be a microprocessor, for example, a microcontroller unit (microcontroller unit, MCU), or may be another conventional processor. When the electronic device 100 is in the off state, the processor 107 may not work. That is, the processor 107 is in a powered-off state. In this way, power consumption of the electronic device 100 can be effectively reduced.

### (3) Audio power amplifier chip 102

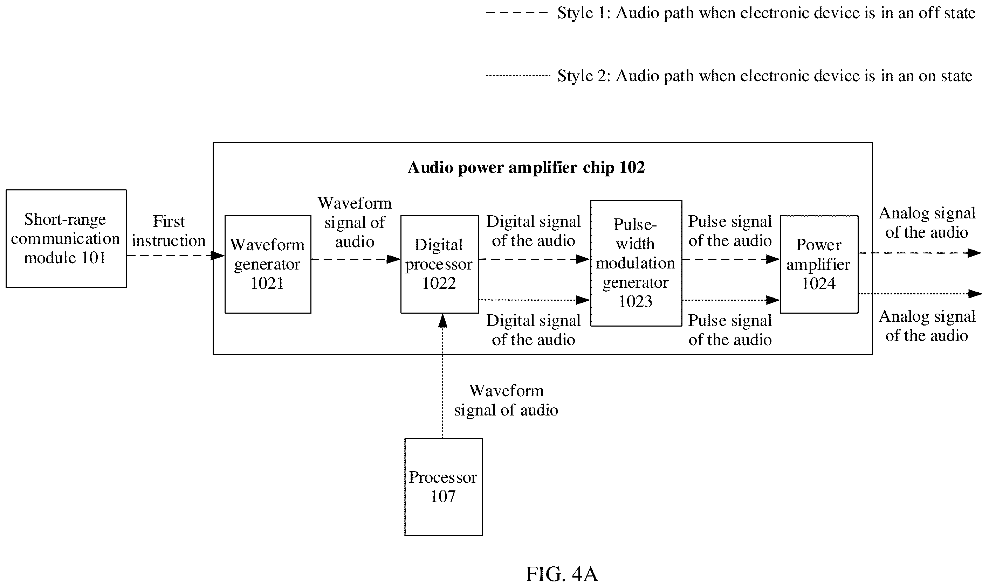

As shown in FIG. 4A, the audio power amplifier chip 102 may include a waveform generator 1021, a digital processor 1022, a pulse-width modulation generator 1023, and a power amplifier 1024. The waveform generator 1021 may be deployed before the digital processor 1022 (as shown in FIG. 4A). Alternatively, in another possible embodiment, the waveform generator 1021 and the digital processor 1022 may be integrated into one module.

The waveform generator 1021 is configured to generate a waveform signal of a specific shape and frequency, depending on an application scenario and a design requirement. For example, when the audio power amplifier chip is a smart PA chip, the waveform generator 1021 includes the following functions. Signal generation: The waveform generator 1021 may generate different types of signals, such as a sine wave, a square wave, and a triangular wave. These signals may be used for various audio processing and test applications, such as audio signal generation and frequency response testing. Frequency adjustment: By adjusting parameters (such as a frequency and a period) of the waveform generator 1021, precise control over an output signal frequency may be implemented, which is very useful for aspects such as debugging and frequency response calibration of an audio system. Analog audio: The waveform generator 1021 may simulate various audio effects, such as reverberation, chorus, and echo, which may be specifically implemented by generating a waveform signal of a specific shape and delay. This helps enhance audio experience and sound effect processing. Providing a reference signal: In some applications, the waveform generator 1021 may further provide a reference signal (for example, a clock signal or a synchronization signal), to help implement coordination and data synchronization between elements in the audio power amplifier chip 102.

The digital processor 1022 is a microprocessor specially used for digital signal processing, and has a capability of efficiently processing a digital signal and usually has a dedicated instruction set and hardware accelerator, to optimize execution of a digital signal processing algorithm. The digital processor 1022 is implemented by a combination of components such as a kernel, a memory, a digital signal processing unit, and an input/output interface. In this embodiment of this application, the digital processor 1022 may perform audio signal conversion processing, and perform various audio processing algorithms, such as an equalizer, noise reduction, and reverberation, to improve audio quality.

The pulse-width modulation generator 1023 may be an electronic device or a circuit, and is configured to generate a PWM signal with an adjustable pulse width. A specific implementation of the pulse-width modulation generator 1023 may include but is not limited to the following manners.

Manner 1: Implemented by using a comparator (Comparator). One or more comparators are used to compare an input signal with an adjustable reference signal. A PWM signal may be obtained after a waveform output by one or more comparators is normalized and filtered.

Manner 2: Implemented by using a timer/counter (Timer/Counter). A timer or counter is used to generate a clock signal with a fixed frequency, and then a pulse width of a waveform signal is adjusted by setting a counting period and a duty cycle.

Manner 3: Implemented by using a pulse-width modulation chip. A dedicated PWM chip or an integrated circuit is used. These chips usually include a comparator, a counter, and control logic, and can adjust a PWM waveform parameter by configuring a register or an external input.

Manner 4: Implemented by using a microcontroller (Microcontroller). A microcontroller or a single-chip microcomputer with a PWM output function is used. These microcontrollers are usually integrated with a PWM module, and can generate a PWM signal by setting a parameter through programming.

The power amplifier 1024 may be any one of a class-A power amplifier, a class-B power amplifier, a class-AB power amplifier, or a class-D power amplifier. This is not specifically limited in this embodiment of this application.

As shown in FIG. 4A, the waveform generator 1021 may generate a waveform signal of audio, and input the waveform signal of the audio to the digital processor 1022. The digital processor 1022 may convert the waveform signal of the audio into a digital signal of the audio, and input the digital signal of the audio to the pulse-width modulation generator 1023. The pulse-width modulation generator 1023 modulates the digital signal of the audio to obtain a pulse signal of the audio. The power amplifier 1024 may perform power amplification on the pulse signal of the audio to obtain an analog signal of the audio, and drive the speaker 104 of the electronic device 100 to output the analog signal of the audio.

In this embodiment of this application, an audio path used for retrieving the electronic device 100 when the electronic device 100 is in the on state is different from an audio path used for retrieving the electronic device 100 when the electronic device 100 is in the off state.

Still refer to FIG. 4A. The audio path used when the electronic device 100 is in the off state is an audio path corresponding to a dashed line of a style 1 in FIG. 4A. Specifically, in the audio path, when the electronic device 100 is in the off state, the waveform generator 1021 may receive a first instruction from the short-range communication module 101 in the electronic device 100, generate a waveform signal of audio in response to the first instruction, and input the waveform signal of the audio to the digital processor 1022. The digital processor 1022 may convert the waveform signal of the audio into a digital signal of the audio, and input the digital signal of the audio to the pulse-width modulation generator 1023. The pulse-width modulation generator 1023 modulates the digital signal of the audio to obtain a pulse signal of the audio. The power amplifier 1024 may perform power amplification on the pulse signal of the audio to obtain an analog signal of the audio, and drive the speaker 104 of the electronic device 100 to output the analog signal of the audio.

In addition, the audio path used when the electronic device 100 is in the on state is an audio path corresponding to a dashed line of a style 2 in FIG. 4A. Specifically, in the audio path, when the electronic device 100 is in the on state, the processor 107 in the electronic device 100 may generate a waveform signal of audio, and input the waveform signal of the audio to the digital processor 1022. The digital processor 1022 may convert the waveform signal of the audio into a digital signal of the audio, and input the digital signal of the audio to the pulse-width modulation generator 1023. The pulse-width modulation generator 1023 modulates the digital signal of the audio to obtain a pulse signal of the audio. The power amplifier 1024 may perform power amplification on the pulse signal of the audio to obtain an analog signal of the audio, and drive the speaker 104 of the electronic device 100 to output the analog signal of the audio.

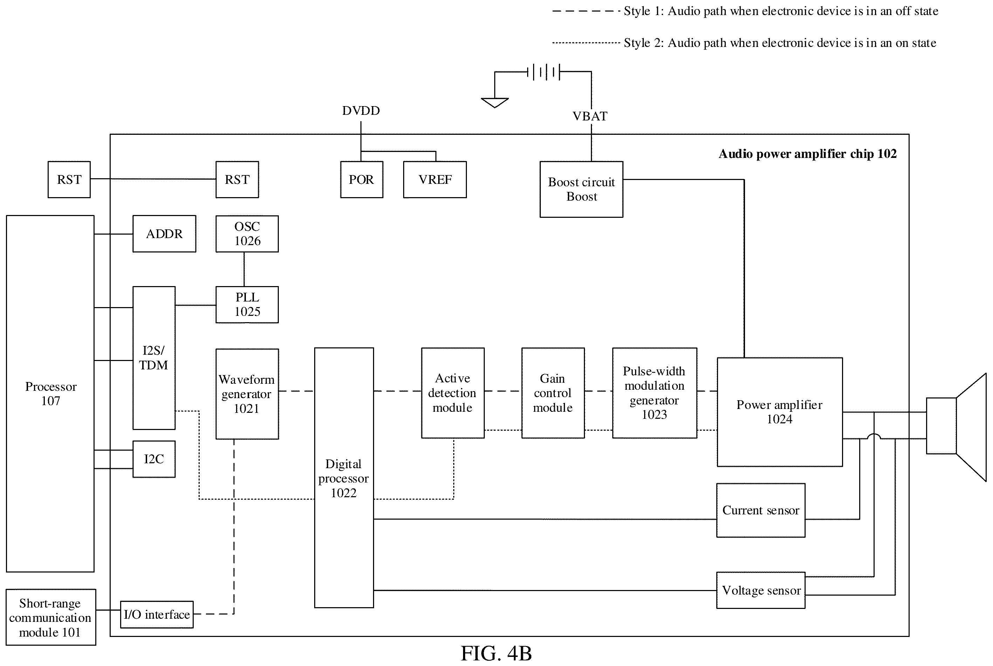

Further, FIG. 4B is a more detailed diagram of a structure of the audio power amplifier chip 102. As shown in FIG. 4B, the audio power amplifier chip 102 may further include an I/O interface, an active detection module, and a gain control module. The I/O interface is connected to the waveform generator 1021, so that the waveform generator 1021 may receive an instruction from another module in the electronic device 100 through the I/O interface. Correspondingly, the audio path used when the electronic device 100 is in the off state may be an audio path corresponding to a dashed line of a style 1 in FIG. 4B. In the audio path, when the electronic device 100 is in the off state, the waveform generator 1021 may receive a first instruction from the short-range communication module 101 through the I/O interface, generate a waveform signal of audio in response to the first instruction, and input the waveform signal of the audio to the digital processor 1022. The digital processor 1022 may convert the waveform signal of the audio into a digital signal of the audio, and input the digital signal of the audio to the active detection module. The active detection module may analyze a strength of the digital signal of the audio, and adjust a gain level based on a real-time monitoring result. In addition, the gain control module adjusts an amplification factor or attenuation degree of the digital signal of the audio, to adapt to different output requirements. After adjusting the digital signal of the audio, the gain control module inputs an adjusted digital signal of the audio to the pulse-width modulation generator 1023. The pulse-width modulation generator 1023 modulates the digital signal of the audio to obtain a pulse signal of the audio. The power amplifier 1024 may perform power amplification on the pulse signal of the audio to obtain an analog signal of the audio, and drive the speaker 104 of the electronic device 100 to output the analog signal of the audio.

The audio path used when the electronic device 100 is in the on state may alternatively be an audio path corresponding to a dashed line of a style 2 in FIG. 4B. In the audio path, when the electronic device 100 is in the on state, if the processor 107 receives a first instruction from the short-range communication module 101, the processor 107 may generate a waveform signal of audio in response to the first instruction, and input the waveform signal of the audio to the digital processor 1022 through the I2S. The digital processor 1022 may convert the waveform signal of the audio into a digital signal of the audio, and input the digital signal of the audio to the active detection module. The active detection module may analyze a strength of the digital signal of the audio, and adjust a gain level based on a real-time monitoring result. In addition, the gain control module adjusts an amplification factor or attenuation degree of the digital signal of the audio, to adapt to different output requirements. After adjusting the digital signal of the audio, the gain control module inputs an adjusted digital signal of the audio to the pulse-width modulation generator 1023. The pulse-width modulation generator 1023 modulates the digital signal of the audio to obtain a pulse signal of the audio. The power amplifier 1024 may perform power amplification on the pulse signal of the audio to obtain an analog signal of the audio, and drive the speaker 104 of the electronic device 100 to output the analog signal of the audio.

Still refer to FIG. 4B. The audio power amplifier chip 102 may further include a PLL 1025 and an oscillator (oscillator, OSC) 1026. The oscillator 1026 may provide a clock signal for the PLL 1025 when the electronic device 100 is in the off state. The clock signal is used to implement clock synchronization of components in the audio power amplifier chip 102. In this way, when the electronic device 100 is in the off state, the PLL 1025 may also implement clock synchronization of components in the audio power amplifier chip 102 based on a corresponding clock signal, so that the audio power amplifier chip 102 may drive the speaker 104 to ring. In addition, when the PLL 1025 uses the OSC 1026 as a reference signal source, a frequency or a phase of the OSC 1026 may be further adjusted by using a feedback mechanism, to generate a stable and accurate output clock signal. In this way, the audio power amplifier chip 102 can obtain a high-quality clock signal through collaboration between the PLL 1025 and the OSC 1026, thereby implementing functions such as audio processing, time sequence control, and data synchronization.

Further, the audio power amplifier chip 102 further includes a digital power supply voltage (digital voltage drain, DVDD), a voltage of battery (voltage of battery, VBAT), a power-on reset (power-on reset, POR), a reference voltage (reference voltage, VREF), and a boost circuit (Boost). The DVDD is used to supply power to a digital circuit part in the audio power amplifier chip 102, and provides a power supply voltage and a current required by the digital circuit, to ensure that the digital circuit can work normally. The VBAT is an input voltage of battery of the audio power amplifier chip 102. During application that relies on a battery as a power supply, the VBAT provides a power supply voltage required by the audio power amplifier chip 102, and is used to support a connection to an external battery system and a corresponding power management function. The POR is an important function of the audio power amplifier chip 102, and is used to ensure that the system is in a controllable initial state during power-on. A POR circuit detects a rising edge of power supply of the audio power amplifier chip 102, and may generate a reset signal to initialize modules in the chip to a defined state. The VREF provides a stable reference level and is used within the audio power amplifier chip 102 for referencing and comparing other voltages or signals.

In this embodiment of this application, when the electronic device 100 is in the off state, the DVDD may supply power to the POR and provide a voltage required by the VREF. When receiving a power-on signal of the battery 103, the VBAT may be a power supply voltage provided by the audio power amplifier chip 102. Alternatively, when receiving a power-on signal of the power supply switch 105, the VBAT may be a power supply voltage provided by the audio power amplifier chip 102. Alternatively, when receiving a power-on signal of the PMU 106, the VBAT may be a power supply voltage provided by the audio power amplifier chip 102.

### (4) Speaker 104

The speaker 104 may be, for example, some or more of a moving-coil speaker, a diaphragm speaker, a speaker array, and the like. For another example, the speaker 104 may be a loudspeaker.

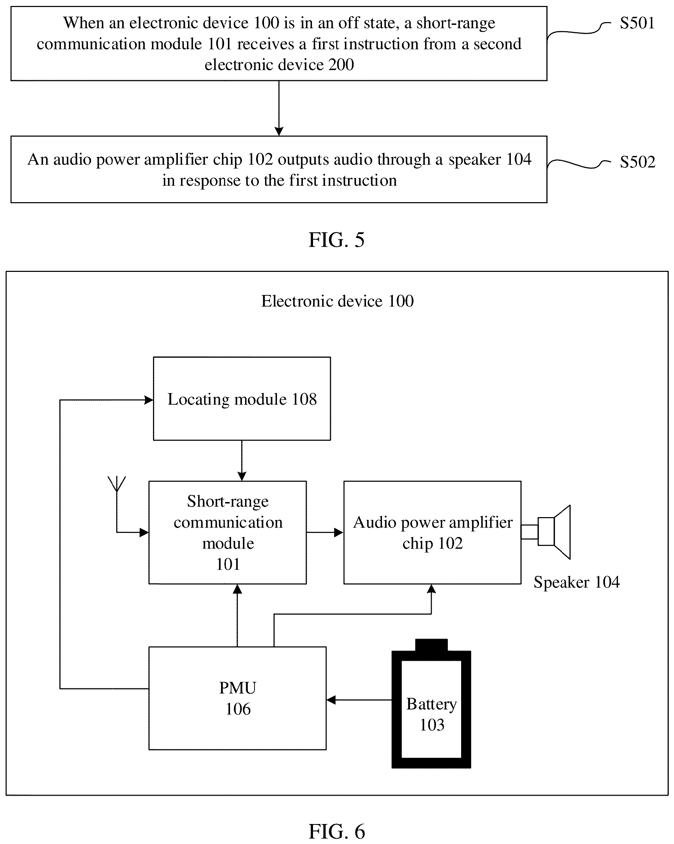

Based on the electronic device 100 and the audio power amplifier chip 102, an embodiment of this application provides a device retrieval method. The method may be applied to the electronic device 100. Refer to FIG. 5. The method includes the following steps.

S501: When the electronic device 100 is in an off state, the short-range communication module 101 receives a first instruction from a second electronic device 200. The first instruction is used to instruct the audio power amplifier chip 102 to output audio through a speaker.

S502: The audio power amplifier chip 102 outputs audio through a speaker 104 in response to the first instruction.

In one case, a waveform generator 1021 is deployed outside a digital processor 1022, and a process in which the audio power amplifier chip 102 outputs the audio through the speaker 104 in response to the first instruction may include: The waveform generator 1021 generates a waveform signal of audio in response to the first instruction, and inputs the waveform signal of the audio into the digital processor 1022. The digital processor 1022 may convert the waveform signal of the audio into a digital signal of the audio, and input the digital signal of the audio to a pulse-width modulation generator 1023. The pulse-width modulation generator 1023 modulates the digital signal of the audio to obtain a pulse signal of the audio. The power amplifier 1024 may perform power amplification on the pulse signal of the audio to obtain an analog signal of the audio, and drive the speaker 104 of the electronic device 100 to output the analog signal of the audio.

In another case, a waveform generator 1021 is deployed in a digital processor 1022, and a process in which the audio power amplifier chip 102 outputs the audio through the speaker 104 in response to the first instruction may include: The waveform generator 1021 in the digital processor 1022 generates a waveform signal of audio in response to the first instruction. A DSP module in the digital processor 1022 converts the waveform signal of the audio into a digital signal of the audio, and inputs the digital signal of the audio to a pulse-width modulation generator 1023. The pulse-width modulation generator 1023 modulates the digital signal of the audio to obtain a pulse signal of the audio. The power amplifier 1024 may perform power amplification on the pulse signal of the audio to obtain an analog signal of the audio, and drive the speaker 104 of the electronic device 100 to output the analog signal of the audio.

In the method shown in S501 and S502, when the electronic device 100 is lost, even if the electronic device 100 is in the off state, the user may search for the electronic device 100 in time based on an audio signal output by the speaker 104, thereby effectively increasing a probability of successfully retrieving the electronic device 100. In addition, compared with the foregoing technical solution in which, when the electronic device 100 is in the off state, a SOC or a codec in the electronic device 100 controls the audio power amplifier chip to output the audio through the speaker in response to a ring instruction received by the short-range communication module, this embodiment of this application does not require power supply to the SOC or the codec, thereby effectively reducing power consumption of the electronic device during a retrieval process. In addition, because fewer modules require power supply when the electronic device is in the off state, a battery life of the electronic device in the off state is longer, which can further increase a probability of successfully retrieving the electronic device 100.

During specific implementation of S502, the audio power amplifier chip 102 may control the speaker 104 to output the audio at maximum volume of the electronic device 100. This increases a probability that a user who searches for the electronic device 100 hears the audio, thereby increasing a probability of successfully retrieving the electronic device 100. Further, when the speaker 104 outputs the audio at the maximum volume of the electronic device 100, even if the electronic device 100 detects an operation of adjusting a volume button by the user, the speaker 104 may still output the audio at the maximum volume. This effectively prevents a user who steals the electronic device 100 from lowering volume of the audio.

The audio power amplifier chip 102 may be in a powered-off state before the short-range communication module 101 receives the first instruction, and after the short-range communication module 101 receives the first instruction, the short-range communication module 101 triggers the audio power amplifier chip 102 to be powered on. In this way, power consumption of the electronic device 100 in the off state can be further reduced, and a battery life of the electronic device 100 in the off state is increased, thereby further increasing a probability of successfully retrieving the lost electronic device 100.

That the short-range communication module 101 triggers the audio power amplifier chip 102 to be powered on includes but is not limited to the following cases.

Case 1: The short-range communication module 101 sends a second instruction to the audio power amplifier chip 102 after receiving the first instruction, where the second instruction is used to start the audio power amplifier chip 102. Correspondingly, the audio power amplifier chip 102 may perform self-start in response to the second instruction.

Case 2: The short-range communication module 101 sends a second instruction to a power supply switch 105 after receiving the first instruction, where the second instruction is used to start the audio power amplifier chip 102. Correspondingly, the power supply switch 105 sends a power-on signal to the audio power amplifier chip 102 in response to the second instruction, and the audio power amplifier chip 102 receives the power-on signal and performs self-start.

Case 3: The short-range communication module 101 sends a second instruction to a PMU 106 after receiving the first instruction, where the second instruction is used to start the audio power amplifier chip 102. Correspondingly, the PMU 106 sends a power-on signal to the audio power amplifier chip 102 in response to the second instruction, and the audio power amplifier chip 102 receives the power-on signal and performs self-start.

As shown in FIG. 6, in a possible implementation, the electronic device 100 may further include a locating module 108. The locating module 108 may obtain location information of the electronic device 100 in response to the first instruction, and upload the location information to a server. Further, the server may send the location information of the electronic device 100 to the second electronic device 200. In this way, when the electronic device 100 is in the off state, the locating module 108 may still obtain the location information of the electronic device 100, to implement precise locating of the electronic device 100, thereby further increasing a success rate of retrieving the electronic device 100. The locating module 108 may be in a powered-off state before the short-range communication module 101 receives the first instruction, and after the short-range communication module 101 receives the first instruction, the short-range communication module 101 triggers the locating module 108 to be powered on. Similarly, that the short-range communication module 101 triggers the locating module 108 to be powered on may include but is not limited to the following cases.

Case 1: The short-range communication module 101 sends a second instruction to the locating module 108 after receiving a third instruction, where the second instruction is used to start the locating module 108. Correspondingly, the locating module 108 may perform self-start in response to the second instruction.

Case 2: The short-range communication module 101 sends a second instruction to a power supply switch 105 after receiving a third instruction, where the second instruction is used to start the locating module 108. Correspondingly, the power supply switch 105 sends a power-on signal to the locating module 108 in response to the second instruction, and the locating module 108 receives the power-on signal and performs self-start.

Case 3: The short-range communication module 101 sends a second instruction to a PMU 106 after receiving a third instruction, where the second instruction is used to start the locating module 108. Correspondingly, the PMU 106 sends a power-on signal to the locating module 108 in response to the second instruction, and the locating module 108 receives the power-on signal and performs self-start.

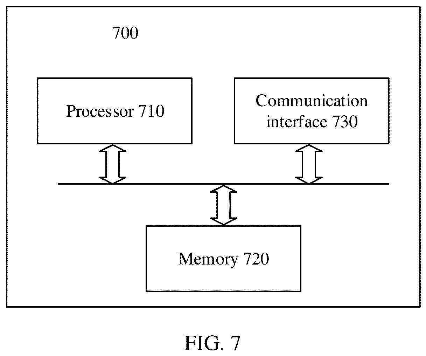

Based on a same technical concept, an embodiment of this application further provides another electronic device. As shown in FIG. 7, the electronic device 700 may include at least one processor 710 and a communication interface 730. In an optional design, a memory 720 may be further included.

A specific connection medium between the processor 710 and the memory 720 is not limited in embodiments of this application. When communicating with another device, the processor 710 may perform data transmission through the communication interface 730.

The processor 710 in FIG. 7 may invoke computer-executable instructions stored in the memory 720, so that the apparatus 700 can perform any one of the foregoing method embodiments. For a specific implementation, refer to the method steps implemented by the electronic device in the foregoing method embodiments. Details are not described herein again.

In embodiments of this application, the processor is a circuit with a signal processing capability. In an implementation, the processor may be a circuit with an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as the ASIC, for example, a neural network processing unit (Neural Network Processing Unit, NPU), a tensor processing unit (Tensor Processing Unit, TPU), or a deep learning processing unit (Deep learning Processing Unit, DPU).

An embodiment of this application further relates to a chip system. The chip system includes a processor. The processor is configured to invoke a computer program or computer instructions stored in a memory, so that the processor performs the method according to any one of the foregoing embodiments.

In a possible implementation, the processor is coupled to the memory through an interface.

In a possible implementation, the chip system may alternatively directly include a memory. The memory stores a computer program or computer instructions.

For example, the memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

An embodiment of this application further relates to a processor. The processor is configured to invoke a computer program or computer instructions stored in a memory, so that the processor performs the method according to any one of the foregoing embodiments.

In an example, in embodiments of this application, the processor is an integrated circuit chip, and has a signal processing capability. For example, the processor may be an FPGA, may be a general-purpose processor, a DSP, an ASIC, or another programmable logic device, a discrete gate or transistor logic device, or a discrete hardware component, or may be a system on chip (system on chip, SoC), or may be a CPU, or may be a network processor (network processor, NP), or may be a microcontroller unit (microcontroller unit, MCU), or may be a PLD, or another integrated chip, and may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It should be understood that embodiments of this application may be provided as a method, a system, or a computer program product.

In a possible implementation, an embodiment of this application provides a computer-readable storage medium. The computer-readable storage medium stores program code. When the program code is run on a computer, the computer is enabled to perform the foregoing method embodiments.

In a possible implementation, an embodiment of this application provides a computer program product. When the computer program product is run on a computer, the computer is enabled to perform the foregoing method embodiments.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to this application without departing from the spirit and scope of this application. In this way, if these modifications and variations to this application fall within the scope of the claims of this application and equivalent technologies thereof, this application is also intended to include these modifications and variations.

## Claims

1. An electronic device, comprising an audio power amplifier chip, a short-range communication module, and a speaker, wherein
the short-range communication module is configured to receive a first instruction from a second electronic device when the electronic device is in an off state; and
the audio power amplifier chip is configured to output audio through the speaker in response to the first instruction.

2. The electronic device according to claim 1, wherein the short-range communication module is further configured to:
send a second instruction to the audio power amplifier chip after receiving the first instruction, wherein the second instruction is used to start the audio power amplifier chip.

3. The electronic device according to claim 1 or 2, further comprising a battery, wherein
the battery is configured to supply power to the audio power amplifier chip and/or the short-range communication module when the electronic device is in the off state.

4. The electronic device according to claim 3, further comprising a power supply switch, wherein
the power supply switch is configured to control the battery to supply power to the audio power amplifier chip and the short-range communication module when the electronic device is in the off state.

5. The electronic device according to any one of claims 1 to 4, further comprising a power management unit, wherein
the power management unit is configured to supply power to the audio power amplifier chip and the short-range communication module when the electronic device is in the off state.

6. The electronic device according to any one of claims 1 to 5, wherein when the electronic device is in the off state, if the short-range communication module does not receive the first instruction within preset duration, the short-range communication module is in a powered-off state.

7. The electronic device according to any one of claims 1 to 5, wherein when the electronic device is in the off state, the short-range communication module is in a powered-on state within a preset period, and the short-range communication module is in a powered-off state beyond the preset period.

8. The electronic device according to any one of claims 1 to 7, wherein when the electronic device is in the off state, the short-range communication module is run by a low-power core in the electronic device.

9. The electronic device according to any one of claims 1 to 8, wherein the electronic device further comprises a locating module, and the locating module is configured to:
obtain location information of the electronic device in response to the first instruction, and upload the location information to a server.

10. The electronic device according to claim 9, wherein the short-range communication module is further configured to:
send a third instruction to the locating module after receiving the first instruction, wherein the third instruction is used to start the locating module.

11. An audio power amplifier chip, comprising a waveform generator, a digital processor, a pulse-width modulation generator, and a power amplifier, wherein
the waveform generator is configured to generate a waveform signal of audio;
the digital processor is configured to convert the waveform signal of the audio into a digital signal of the audio;
the pulse-width modulation generator is configured to modulate the digital signal of the audio to obtain a pulse signal of the audio; and
the power amplifier is configured to perform power amplification on the pulse signal of the audio, to obtain an analog signal of the audio.

12. The audio power amplifier chip according to claim 11, wherein the audio power amplifier chip further comprises an I/O interface, and the waveform generator receives a first instruction through the I/O interface; and
generating, by the waveform generator, the waveform signal of the audio comprises:
generating, by the waveform generator, the waveform signal of the audio in response to the first instruction.

13. The audio power amplifier chip according to claim 12, wherein the waveform generator is disposed between the I/O interface and the digital processor, or the waveform generator is disposed in the digital processor.

14. The audio power amplifier chip according to claim 12 or 13, further comprising a phase locked loop and an oscillator, wherein
the oscillator is configured to provide a clock signal for the phase locked loop, and the clock signal is used to implement clock synchronization of components in the audio power amplifier chip.

15. A device retrieval method, applied to an electronic device, wherein the electronic device comprises an audio power amplifier chip, a short-range communication module, and a speaker, and the method comprises:
receiving a first instruction from a second electronic device by using the short-range communication module when the electronic device is in an off state; and
outputting, by the audio power amplifier chip, audio through the speaker in response to the first instruction.

16. The method according to claim 15, further comprising:
sending, by the short-range communication module, a second instruction to the audio power amplifier chip after receiving the first instruction, wherein the second instruction is used to start the audio power amplifier chip.

17. The method according to claim 15 or 16, wherein the electronic device further comprises a battery, and the method further comprises:
supplying power to the audio power amplifier chip and/or the short-range communication module by using the battery when the electronic device is in the off state.

18. The method according to claim 17, wherein the electronic device further comprises a power supply switch, and the method further comprises:
controlling, by using the power supply switch, the battery to supply power to the audio power amplifier chip and the short-range communication module when the electronic device is in the off state.

19. The method according to claim 15 or 16, wherein the electronic device further comprises a power management unit, and the method further comprises:
supplying power to the audio power amplifier chip and the short-range communication module by using the power management unit when the electronic device is in the off state.

20. The method according to any one of claims 15 to 19, further comprising:
when the electronic device is in the off state, if the short-range communication module does not receive the first instruction within preset duration, the short-range communication module is in a powered-off state.

21. The method according to any one of claims 15 to 19, further comprising:
the short-range communication module is in a powered-on state within a preset period, and the short-range communication module is in a powered-off state beyond the preset period.

22. The method according to any one of claims 15 to 21, wherein when the electronic device is in the off state, the short-range communication module is run by a low-power core in the electronic device.

23. The method according to any one of claims 15 to 22, wherein the electronic device further comprises a locating module, and the method further comprises:
obtaining, by the locating module in response to the first instruction, location information of the electronic device, and uploading the location information to a server.

24. The method according to claim 23, further comprising:
sending, by the short-range communication module, a third instruction to the locating module after receiving the first instruction, wherein the third instruction is used to start the locating module.

25. A computer-readable storage medium, wherein the computer-readable storage medium comprises a computer program, and when the computer program is run on a method, the method is enabled to perform the method according to any one of claims 15 to 24.
